# EUROPEAN PATENT SPECIFICATION

(11) **EP 2 058 184 B1**
(45) Date of publication and mention of the grant of the patent: **26.06.2013**
(21) Application number: 07425705.6
(22) Date of filing: 09.11.2007
(51) Int. Cl.: B60T 7/10, G05G 1/04, B60T 7/06

(54) **A device for actuating a pedal used in driving a motor vehicle, in particular for driving systems designed for people who are unable to use their lower limbs**
Vorrichtung zur Pedalbetätigung, das beim Antreiben eines Motorfahrzeugs benutzt wird, insbesondere für Antriebssysteme, die für Personen entworfen wurden, die ihre unteren Extremitäten nicht benutzen können
Dispositif d'actionnement de pédale utilisée pour commander un véhicule à moteur, en particulier pour des systèmes de commande désignés pour les personnes dans l'incapacité d'utiliser leurs membres inférieurs

(43) Date of publication of application: 13.05.2009
(73) Proprietor: Kivi S.R.L, 14040 Vigliano (IT)
(72) Inventor: Giberti, Giancarlo, 14040 Vigliano d'Asti (IT)
(74) Representative: Notaro, Giancarlo

(56) References cited:
- WO-A-2006/054122
- WO-A-2007/017961
- JP-A- 3 141 414
- JP-A- 2002 120 636
- JP-A- 2003 165 350
- US-A- 5 603 674

## Description

The present invention relates to the field of manual actuation devices for driving motor vehicles, particularly for driving systems for people who are unable to use their lower limbs. In particular, the invention relates to a device for manual control of a driving pedal of a vehicle, in particular the brake pedal.

Typically, for the actuation of the brake pedal in a driving system for people who are unable to use their lower limbs a control lever is used located under the driving wheel and connected to the brake pedal via a system of linkages.

Driving systems for people who are unable to use their lower limbs are generally adapted to be applied to normal-production motor vehicles. The driving system must ensure the functionality of the driving controls already present on the vehicle, without jeopardizing the characteristics of safety and reliability thereof.

In the case of the brake pedal, the driving system must ensure the possibility of carrying out braking with a manual control that will not jeopardize the reliability of the vehicle braking system.

The systems so far used envisage a connection of a purely mechanical type between the lever that can be operated by hand by the driver and the brake pedal. The main drawback of mechanical control systems of this type is represented by the overall dimensions of the mechanism of transmission that connects the actuation lever to the pedal. On more recent vehicles, the space available underneath the driving wheel for installation of driving systems is more and more reduced, and the installation of a mechanical control device proves increasingly problematical.

There are also known devices for actuation of a pedal of a vehicle that envisage an electrical actuator associated to the pedal and controlled at a distance by a member that can be operated by hand (see US5603674). Systems of this type are not, however, indicated for controlling the brake pedal since a possible failure to the electrical control system or to the electrical actuator would entail the impossibility of applying the brakes on the vehicle.

WO2006054122A1 discloses a system for hand operation of a brake or clutch pedal according to the preamble of claim 1, comprising a hydraulic pump actuated by a lever and connected to a servo-device by a first hydraulic line, the servo-device being connected via a second hydraulic line to a hydraulic actuator controlling a pedal. Installation of a system according to WO2006054122A1 on normal-production motor vehicles is difficult because it requires a servo-device connected to the internal combustion engine of the vehicle.

JP03141414-A discloses a lever rigidly connected to a pedal for the hand operation of the pedal. Also this solution is not easily applicable to normal-production motor vehicles.

The object of the present invention is to provide a device for controlling a driving pedal of a motor vehicle, in particular for controlling the brake, that will not be affected by the aforesaid drawbacks.

According to the present invention, said object is achieved by a device having the characteristics forming the subject of Claim 1.

The characteristics and advantages of the device according to the present invention will emerge clearly from the ensuing detailed description, which is provided purely by way of non-limiting example, with reference to the attached drawings, in which:
- Figure 1 is a perspective view of a device according to the present invention;
- Figure 2 is a perspective view showing the device of Figure 1 mounted on a vehicle;
- Figure 3 is a cross section according to the line III-III of Figure 1;
- Figures 4 and 5 are sections according to the line IV-IV of Figure 1, in two operative positions; and
- Figure 6 is a perspective view from a different angle of the part indicated by the arrow VI in Figure 1.

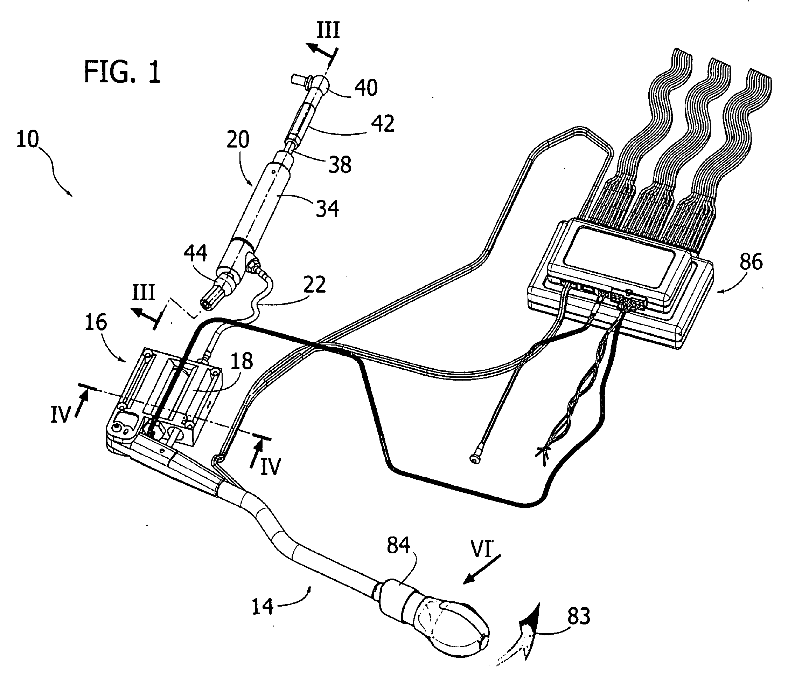

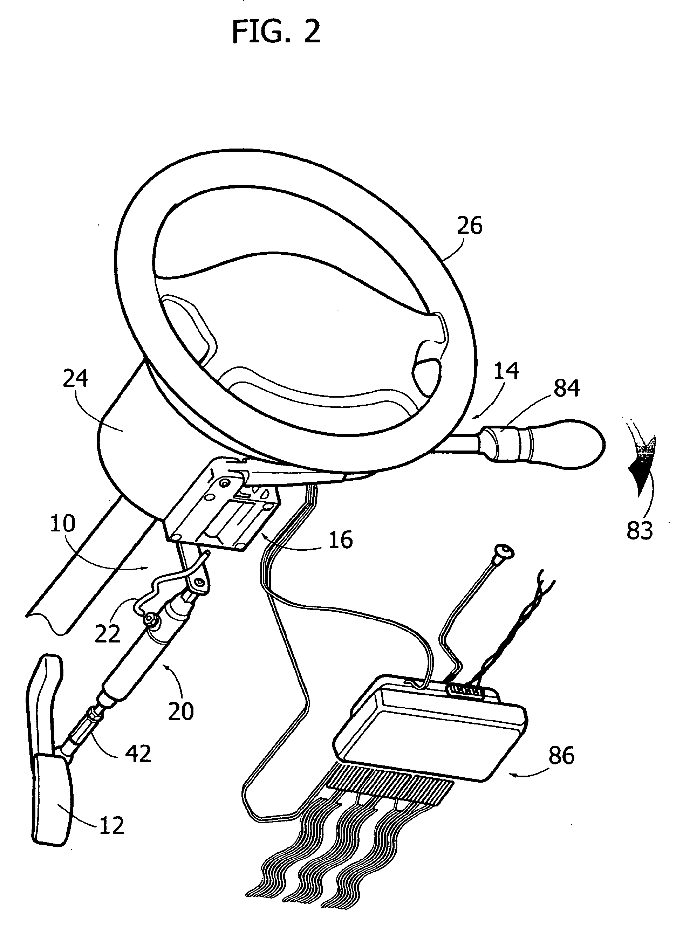

With reference to Figures 1 and 2, designated by 10 is a device according to the present invention for controlling a driving pedal 12 of a motor vehicle. The device 10 comprises a lever 14 that can be operated by hand, articulated to a body 16 containing a hydraulic pump 18, preferably a piston pump. The pump 18 is connected to a hydraulic actuator 20 via a hydraulic line 22. As is illustrated in Figure 2, the body 16 carrying the hydraulic pump 18 is designed to be fixed to the support 24 of the steering column of the vehicle, underneath the driving wheel 26. The body 16 can be mounted indifferently in the position illustrated in Figure 2 or in a position turned upside down through 180°. In the position illustrated in Figure 2, the lever 14 projects from the right-hand side of the driving wheel 26 and can be actuated by the driver with his or her right hand, whilst in the position turned upside down through 180° the lever 14 projects from the left side of the driving wheel 26 and can be actuated with the left hand.

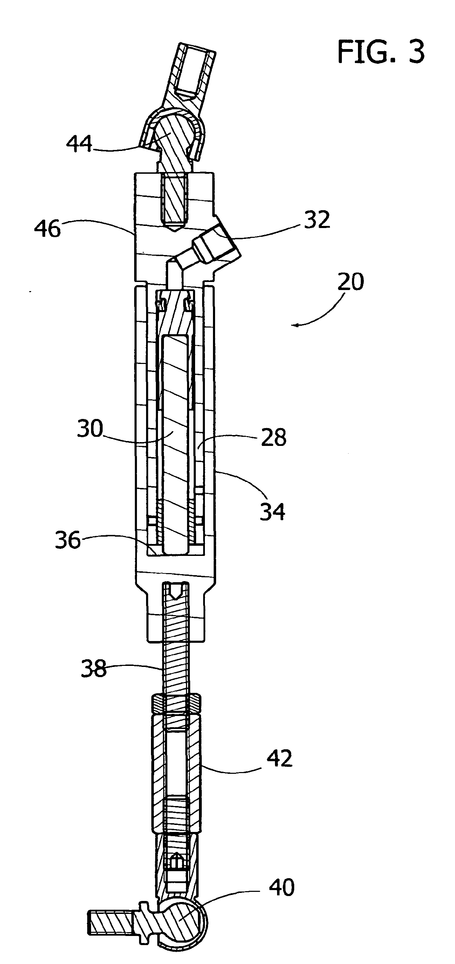

With reference to Figure 3, the hydraulic actuator 20 comprises a hollow cylindrical body 28, slidably mounted within which is a piston 30 having one end that projects on the outside of the cylindrical body 28. The internal cavity of the cylindrical body 28 is connected to an opening 32, to which one end of the hydraulic line 22 is connected. Preferably, the hydraulic actuator 20 comprises a tubular sleeve 34 that slidably engages the outer surface of the cylindrical body 28. The projecting end of the piston 30 rests against a bottom wall 36 of the tubular sleeve 34. The tubular sleeve 34 carries a threaded rod 38, fixed to which is a first ball-and-socket joint 40 via a threaded sleeve 42. A second ball-and-socket joint 44 is fixed to a base 46 of the hollow body 28. The ball-and-socket joints 40, 44 are connected, respectively, to the pedal 12 and to a fixed part, for example a flange fixed to the support 24 of the driving wheel 26. The tubular sleeve 34 is free to slide on the outer surface of the hollow cylindrical body 28. In this way, the pedal 12 can be actuated indifferently by means of the lever 14, by means of the hydraulic control 18, 20, 22, or else by means of direct pressure of the foot on the pedal 12. This enables the use of the vehicle both by people who are unable to use their lower limbs and by people having normal use thereof.

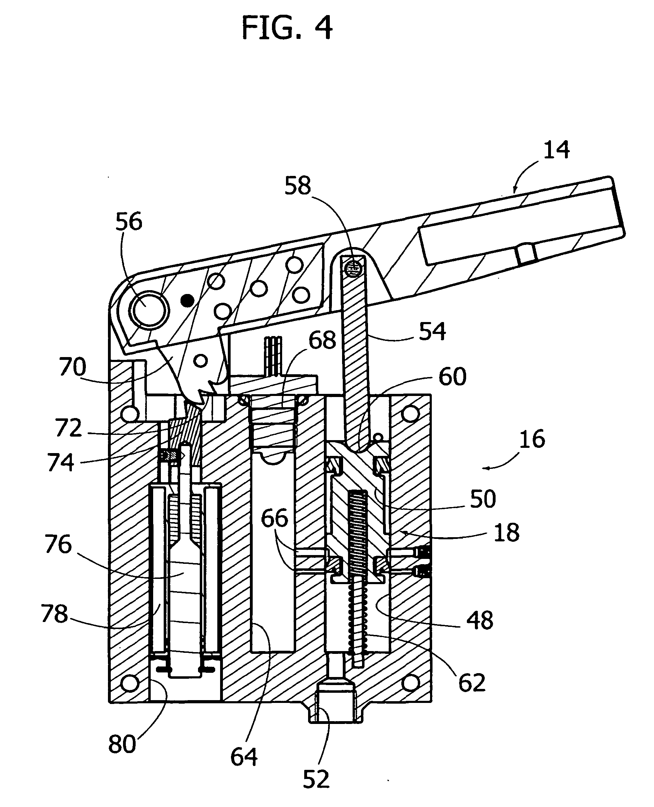

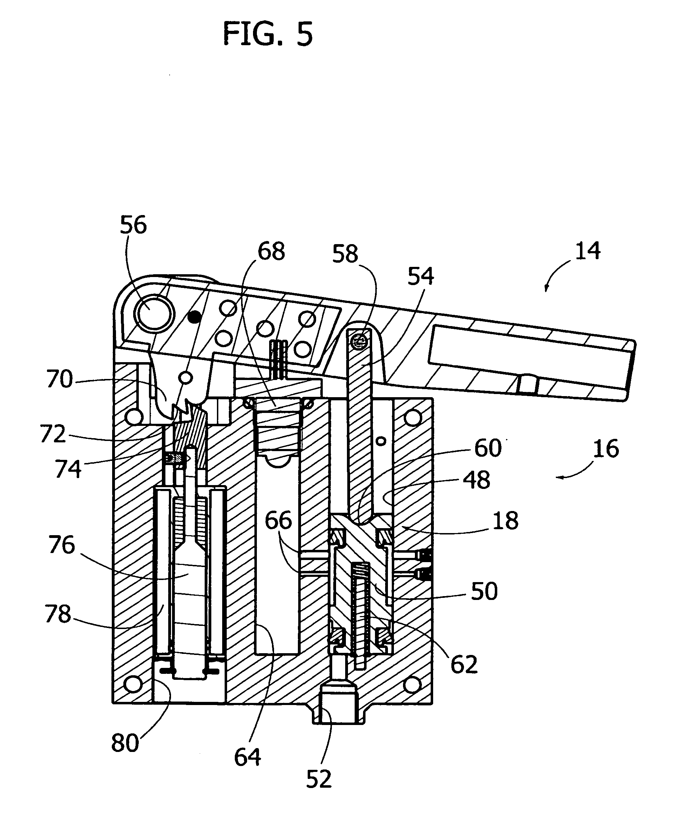

With reference to Figures 4 and 5, the body 16 has a cavity 48, in which there is slidably mounted a piston 50. The cavity 48 and the piston 50 constitute the hydraulic pump 18. The hydraulic cavity 48 of the body 16 is connected to an opening 52, to which the end of the hydraulic line 22 opposite to the one connected to the hydraulic actuator 20 is fixed. The piston 50 of the hydraulic pump 18 is connected to the lever 14 via a rod 54.

The control lever 14 is articulated to the body 16 about an axis 56. The rod 54 that actuates the piston 50 is articulated to the lever 14 about an axis 58 parallel to the axis of articulation 56. The rod 54 has a rounded end 60 that rests in a hemispherical seat of the piston 50 so as to provide an articulation of a ball-and-socket type. It will be understood that the oscillation of the lever 14 about the axis 56 controls an axial displacement of the piston 50 within the cavity 48. A helical spring in compression 62 tends to push the piston 50 in the direction opposite to the direction in which it is pushed by the lever 14.

The cavity 48 of the hydraulic pump 18 is connected to a second cavity 64 constituting a tank for the hydraulic fluid. The tank 64 is connected to the cavity 48 by means of two holes 66. The tank 66 could be provided with a transparent window (not illustrated), which enables control of the level of the liquid. The cavity 64 constituting the tank is closed by a removable cap 68 with integrated level sensor.

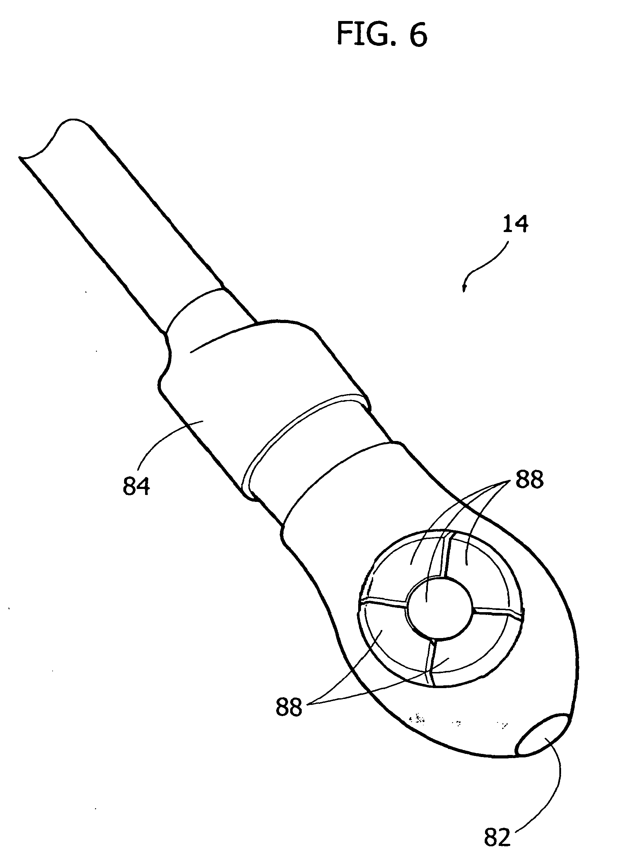

Once again with reference to Figures 4 and 5, according to a preferred embodiment of the present invention, the lever 14 is provided with a projection 70 set in a position corresponding to the axis of articulation 56. The projection 70 is provided with a toothed formation 72 that is designed to co-operate with an arrest member 74. The arrest member 74 is fixed to the end of a mobile core 76 of a linear electrical actuator 78 housed in a seat 80 of the body 16. The electrical actuator 78 can be activated or deactivated by means of a pushbutton 82 (Figure 6) set on the control lever 14. In the activated position, the actuator 78 blocks the lever 14 in the position illustrated in Figure 5. In this condition, the lever 14 is blocked in the position of actuation of the pedal 12. This function is useful for performing the function of parking brake, in the case where the device 10 is applied to the brake pedal.

From the foregoing description, it will be understood that manual actuation of the control lever 14 in the direction indicated by the arrow 83 in Figures 1 and 2 controls the pedal 12 via the hydraulic control system formed by the pump 18, the actuator 20, and the hydraulic line 22. When the pressure on the control lever 14 ceases, the lever itself returns into the original position thanks to the action of return exerted by the pedal 12. The spring 62 that acts on the piston 50 of the hydraulic pump 18 aids the action of return into the original position of the control lever 14.

With reference to Figure 6, various control devices can be integrated on the control lever 14. As already mentioned previously, on the lever 14 a pushbutton 82 can be provided for blocking the lever 14 in the position of actuation of the pedal. Furthermore, a slider 84 can be provided on the lever 14, which can be used, for example, for actuation of the accelerator pedal. The slider 84 can be associated to a position sensor, such as for example a Hall-effect sensor, or to a linear or rotary potentiometer. The electrical signal issued by said sensor is sent to an electronic unit 86 of the vehicle (Figure 1), which controls the amount of fuel supplied to the engine according to the signals received from the position sensor, in a way similar to what occurs by actuating the accelerator pedal of the vehicle.

On the control lever 14 there can be moreover set other control pushbuttons 88 for auxiliary commands, such as for example the horn, the direction indicators, management of the system for controlling the lights, for controlling the windscreen wipers, the cruise-control, etc. The solution according to the present invention thus enables integration in the lever 14 for controlling the brake of the accelerator control and various auxiliary controls of the vehicle, thus providing a single-control driving system that is particularly simple and compact.

Of course, without prejudice to the principle of the invention, the details of construction and the embodiments may vary widely with respect to what is described and illustrated herein, without thereby departing from the scope of the invention, as defined by the ensuing claims.

## Claims

1. A device for controlling a driving pedal (12) of a motor vehicle, in particular in driving systems for people who are unable to use their lower limbs, comprising a hydraulic pump (18) controlled by a lever (14) that can be operated by hand and a hydraulic actuator (20) connected to said driving pedal (12) and hydraulically connected to said pump (18), wherein said hydraulic pump (18) comprises a body (16) articulated to which is said control lever (14), said body (16) having a cavity (48), within which a piston (50), connected to said lever (14), slides, the piston (50) and the corresponding cavity (48) forming a hydraulic piston pump (18) which is connected to said hydraulic actuator (20) via a hydraulic line (22) having a first end connected to an outlet opening (52) of the hydraulic pump (18) and a second end connected to an inlet opening (32) of the hydraulic actuator (20).

2. The device according to Claim 1, **characterized in that** said cavity (48) is connected to a tank containing hydraulic liquid (64) formed by a second cavity made within said body (16).

3. The device according to any one of the preceding claims, **characterized in that** said body (16) carries an electrical blocking actuator (78) designed to block said lever (14) into a position of actuation of said driving pedal (12).

4. The device according to Claim 1, **characterized in that** said hydraulic actuator (20) comprises a hollow cylindrical body (28), slidably housed within which is a piston (30).

5. The device according to Claim 4, **characterized in that** said hydraulic actuator (20) comprises a tubular sleeve (34) that telescopically engages the outer surface of said hollow cylindrical body (28).

6. The device according to Claim 4 or Claim 5, **characterized in that** said hydraulic actuator (20) is equipped, at its opposite ends, with ball-and-socket joints (40, 44).

7. The device according to Claim 1, **characterized in that** the control lever (14) comprises a mobile slider (84) associated to a position sensor connected to an electronic control unit (86), for dosing the fuel according to the position of said slider.

8. The device according to Claim 1 or Claim 7, **characterized in that** said control lever (14) comprises a plurality of electrical pushbuttons (88) for controlling auxiliary functions of the vehicle.

## Patentansprüche

1. Vorrichtung zum Steuern eines Gaspedals (12) eines Kraftfahrzeugs, insbesondere bei Antriebssystemen für Personen, die nicht in der Lage sind, ihre unteren Extremitäten zu benutzen, mit einer hydraulischen Pumpe (18), die von einem Hebel (14) gesteuert wird, der von Hand bedient werden kann, und einem hydraulischen Stellglied (20), das mit dem Gaspedal (12) und hydraulisch mit der Pumpe (18) verbunden ist, wobei die hydraulische Pumpe (18) einen Körper (16) aufweist, an dem der Steuerhebel (14) angelenkt ist, wobei der Körper (16) einen Hohlraum (48) hat, in dem ein Kolben (50), der mit dem Hebel (14) verbunden ist, gleitet, wobei der Kolben (50) und der entsprechende Hohlraum (48) eine hydraulische Kolbenpumpe (18) ausbilden, die mit dem hydraulischen Stellglied (20) über eine hydraulische Leitung (22) verbunden ist, die ein erstes an eine Auslassöffnung (52) der hydraulischen Pumpe (18) verbundenes Ende und ein zweites an eine Einlassöffnung (32) des hydraulischen Stellglieds (20) verbundenes Ende hat.

2. Vorrichtung nach Anspruch 1, **dadurch gekennzeichnet, dass** der Hohlraum (48) mit einem eine hydraulische Flüssigkeit (64) enthaltenden Behälter verbunden ist, der von einem zweiten Hohlraum innerhalb des Körpers (16) ausgebildet ist.

3. Vorrichtung nach einem der vorhergehenden Ansprüche, **dadurch gekennzeichnet, dass** der Körper (16) ein elektrisches Blockierstellglied (78) trägt, das gestaltet ist, um den Hebel (14) in einer Position einer Betätigung des Gaspedals (12) zu blockieren.

4. Vorrichtung nach Anspruch 1, **dadurch gekennzeichnet, dass** das hydraulische Stellglied (20) einen hohlen zylindrischen Körper (28) aufweist, in dem ein Kolben (30) verschiebbar untergebracht ist.

5. Vorrichtung nach Anspruch 4, **dadurch gekennzeichnet, dass** das hydraulische Stellglied (20) eine rohrförmige Hülse (34) aufweist, die teleskopartig die äußere Fläche des hohlen zylindrischen Körpers (28) kuppelt.

6. Vorrichtung nach Anspruch 4 oder Anspruch 5, **dadurch gekennzeichnet, dass** das hydraulische Stellglied (20) an seinen entgegengesetzten Enden mit Kugelgelenken ausgestattet ist.

7. Vorrichtung nach Anspruch 1, **dadurch gekennzeichnet, dass** der Steuerhebel (14) einen mobilen Schieber (84) aufweist, der einem Positionssensor zugeordnet ist, der mit einer elektrischen Steuerungseinheit (86) verbunden ist, um den Kraftstoff entsprechend der Position des Schiebers zu dosieren.

8. Vorrichtung nach Anspruch 1 oder Anspruch 7, **dadurch gekennzeichnet, dass** der Steuerhebel (14) eine Vielzahl von elektrischen Druckknöpfen (88) zum Steuern von Hilfsfunktionen des Fahrzeugs aufweist.

## Revendications

1. Dispositif de commande d'une pédale de conduite (12) d'un véhicule à moteur, en particulier dans des systèmes de conduite destinés à des personnes inaptes à utiliser leurs membres inférieurs, comprenant une pompe hydraulique (18) commandée par un levier (14) qui peut être actionné manuellement et un actionneur hydraulique (20) relié à ladite pédale de conduite (12) et relié hydrauliquement à ladite pompe (18), dans lequel ladite pompe hydraulique comprend un corps (16) sur lequel est articulé ledit levier de commande (14), ledit corps (16) comportant une cavité (48), à l'intérieur de laquelle coulisse un piston (50), relié audit levier (14), le piston (50) et la cavité correspondante (48) formant une pompe à piston hydraulique (18) qui est reliée audit actionneur hydraulique (20) par le biais d'une tuyauterie hydraulique (22) dont une première extrémité est reliée à une ouverture de sortie (52) de la pompe hydraulique (18) et une seconde extrémité est reliée à une ouverture d'entrée (32) de l'actionneur hydraulique (20).

2. Dispositif selon la revendication 1, **caractérisé en ce que** ladite cavité (48) est reliée à un réservoir contenant du liquide hydraulique (64) formé par une seconde cavité réalisée à l'intérieur dudit corps (16).

3. Dispositif selon l'une quelconque des revendications précédentes, **caractérisé en ce que** ledit corps (16) supporte un actionneur de blocage électrique (78) conçu pour bloquer ledit levier (14) dans une position d'actionnement de ladite pédale de conduite (12).

4. Dispositif selon la revendication 1, **caractérisé en ce que** ledit actionneur hydraulique (20) comprend un corps cylindrique creux (28), à l'intérieur duquel un piston (30) est logé de manière coulissante.

5. Dispositif selon la revendication 4, **caractérisé en ce que** ledit actionneur hydraulique (20) comprend un manchon tubulaire (34) qui se met en prise de manière télescopique avec la surface externe dudit corps cylindrique creux (28).

6. Dispositif selon la revendication 4 ou la revendication 5, **caractérisé en ce que** ledit actionneur hydraulique (20) est équipé, au niveau de ses extrémités opposées, d'articulations à rotule (40, 44).

7. Dispositif selon la revendication 1, **caractérisé en ce que** ledit levier de commande (14) comprend un coulisseau mobile (84) associé à un capteur de position connecté à une unité de commande électronique (86), pour doser le carburant en fonction de la position dudit coulisseau.

8. Dispositif selon la revendication 1 ou la revendication 7, **caractérisé en ce que** ledit levier de commande (14) comprend une pluralité de boutons-poussoirs électriques (88) pour commander les fonctions auxiliaires du véhicule.
